(19) Europäisches Patentamt
European Patent Office
Office européen des brevets

(11) Veröffentlichungsnummer: **0 609 246 B1**

(12) # EUROPÄISCHE PATENTSCHRIFT

(45) Veröffentlichungstag der Patentschrift: **06.09.95**

(51) Int. Cl.$^{6}$: **C08G 77/28**, C08G 77/38, C07F 7/08

(21) Anmeldenummer: **92920152.3**

(22) Anmeldetag: **24.09.92**

(86) Internationale Anmeldenummer:
**PCT/EP92/02215**

(87) Internationale Veröffentlichungsnummer:
**WO 93/08228 (29.04.93 93/11)**

(54) **VERFAHREN ZUR HERSTELLUNG VON SCHWEFEL ENTHALTENDE ORGANISCHE RESTE AUFWEISENDEN ORGANOSILICIUMVERBINDUNGEN.**

(30) Priorität: **24.10.91 DE 4135170**

(43) Veröffentlichungstag der Anmeldung:
**10.08.94 Patentblatt 94/32**

(45) Bekanntmachung des Hinweises auf die Patenterteilung:
**06.09.95 Patentblatt 95/36**

(84) Benannte Vertragsstaaten:
**AT BE CH DE ES FR GB IT LI NL**

(56) Entgegenhaltungen:
**EP-A- 0 008 902**
**US-A- 3 215 643**
**US-A- 4 235 638**

(73) Patentinhaber: **WACKER-CHEMIE GMBH**
**Hanns-Seidel-Platz 4**
**D-81737 München (DE)**

(72) Erfinder: **HAGER, Rudolf**
**Beckstr. 57**
**D-8262 Altötting (DE)**
Erfinder: **WOLFERSEDER, Josef**
**Mühldorfer Strasse 72**
**D-8262 Altötting (DE)**
Erfinder: **DEUBZER, Bernward**
**Virchowstr. 14**
**D-8263 Burghausen (DE)**

**EP 0 609 246 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Organosiliciumverbindungen, die mindestens einen über Kohlenstoff an Silicium gebundenen Rest mit einer Sulfonatgruppe oder einer ringförmig gebundenen Gruppierung $-SO_2-O-$ aufweisen. Im Folgenden sollen unter der Bezeichnung Sulfonatgruppen auch Sulfonsäuregruppen $-SO_3H$ verstanden werden.

Sulfonatgruppen aufweisende Organosiliciumverbindungen sind bereits bekannt und können nach verschiedenen Verfahren hergestellt werden. In DE-OS 14 95 434 (Dow Corning Corp.; ausgegeben am 13. November 1969) bzw. den entsprechenden CA 742243 A und CA 760997 A sowie US 4,814,471 (Dow Corning Ltd.; ausgegeben am 21. März 1989) werden beispielsweise Verfahren zur Herstellung sulfonatgruppenhaltiger Organosiliciumverbindungen durch Oxidation der entsprechenden Thiuroniumsalze, Thiocyano- und Mercaptoverbindungen mit gängigen Oxidationsmitteln beschrieben. Zwitterionische sulfonathaltige Siloxane werden nach M. Litt und T. Matsuda, J. Appl. Polym. Sci. 19 (1975) 1221 durch Umsetzung aminoalkylfunktioneller Siloxane mit $\omega$-Alkylsultonen erhalten. Die Sulfonierung von epoxy- und alkenylfunktionellen Organosiliciumverbindungen mit Natrium(hydrogen)sulfit wird in US 4,235,638 (Minnesota Mining and Manufacturing Company; ausgegeben am 25. November 1980) offenbart. Des weiteren wird in EP 8 902 A1 (The British Petroleum Company Ltd.; ausgegeben am 19. März 1980) ein Verfahren zur Modifizierung von anorganischen Oxiden, die an ihrer Oberfläche Hydroxylgruppen aufweisen, durch Umsetzung dieser Hydroxylgruppen mit trifunktionellen Halogenalkylorganyloxysilanen und anschließender Behandlung dieser festen Partikel mit einer wäßrigen Lösung eines anorganischen Sulfits beschrieben.

Aufgabe der vorliegenden Erfindung war es, ein Verfahren bereitzustellen, nach dem Organosiliciumverbindungen, welche Schwefel enthaltende, organische Reste aufweisen, auf einfache Weise hergestellt werden können. Diese Aufgabe wird durch die Erfindung gelöst.

Gegenstand der vorliegenden Erfindung ist ein Verfahren zur Herstellung von Schwefel enthaltende organische Reste aufweisenden Organosiliciumverbindungen, dadurch gekennzeichnet, daß Organosiliciumverbindungen aus Einheiten der allgemeinen Formel

$$R_a(R^1O)_bR^2_cSiO_{\frac{4-a-b-c}{2}} \qquad (I),$$

wobei

- R gleich oder verschieden sein kann und einen einwertigen organischen Rest bedeutet,
- $R^1$ gleich oder verschieden sein kann und Wasserstoffatom oder einen einwertigen organischen Rest bedeutet,
- $R^2$ gleich oder verschieden sein kann und einen Rest -QX bedeutet mit Q gleich zweiwertigem Kohlenwasserstoffrest ausgewählt aus Alkylen- oder Cycloalkylenresten mit 2-10 Kohlenstoffatomen und X gleich Halogenatom,
- a 0, 1, 2 oder 3 ist,
- b 0, 1, 2 oder 3 ist und
- c 0, 1, 2 oder 3 ist,

mit der Maßgabe, daß die Organosiliciumverbindung pro Molekül mindestens einen Rest $R^2$ aufweist und die Summe aus a, b und c kleiner oder gleich 4 ist,
mit Sulfit in Anwesenheit von Wasser umgesetzt werden.

Die nach dem erfindungsgemäßen Verfahren erhältlichen Organosiliciumverbindungen enthalten pro Molekül mindestens eine SiC-gebundene Gruppe $-QSO_3M_v$, wobei Q eine der obengenannten Bedeutungen hat, M ein Kation bedeutet und v gleich dem reziproken Wert der Ladung von M ist, oder eine ringförmig gebundene Gruppierung $-SO_2-O-$. Verbindungen mit ringförmig gebundenen Gruppierungen $-SO_2-O-$ werden im allgemeinen als Sultone bezeichnet und sind innere Ester von Verbindungen, die sowohl Reste $-SO_3H$ als auch Hydroxylgruppen aufweisen.
(Sog. "Silasultone" enthalten die Gruppierung

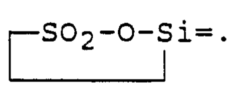
.)

Beispiele für Rest M sind Proton, Kationen der Alkalimetalle, wie die von Lithium, Natrium, Kalium, Rubidium und Cäsium, Kationen der Erdalkalimetalle, wie Magnesium und Calcium, sowie Reste der Formel

$^{+}NR^3_4$ (V),

wobei $R^3$ gleich oder verschieden sein kann und ein Wasserstoffatom, einen einwertigen organischen Rest oder einen Organosiliciumrest bedeutet, wie beispielsweise Methyl-, Ethyl-, n-Propyl-, iso-Propyl-, n-Butyl-, Isobutyl-, n-Pentyl-, iso-Pentyl-, n-Hexyl-, Benzyl-, 2-Hydroxyethyl- und 3-Hydroxypropylreste sowie 3-Sil-(oxan)ylpropylreste mit beliebig variablem Sil(oxan)ylrest.

Bei Rest R handelt es sich bevorzugt um gegebenenfalls substituierte Kohlenwasserstoffreste mit 1 bis 12 Kohlenstoffatom(en), wobei Kohlenwasserstoffreste mit 1 bis 6 Kohlenstoffatom(en), insbesondere der Methylrest, besonders bevorzugt sind.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste, Arylreste, wie der Phenyl- und der Naphthylrest; Alkarylreste, wie o-, m-, p-Tolylreste, xylylreste und Ethylphenylreste; Aralkylreste, wie der Benzylrest, der $\alpha$- und der $\beta$-Phenylethylrest.

Bei Rest $R^1$ handelt es sich bevorzugt um Wasserstoffatom und gegebenenfalls substituierte Kohlenwasserstoffreste mit 1 bis 6 Kohlenstoffatom(en), wobei Wasserstoffatom und Alkylreste mit 1 bis 3 Kohlenstoffatom(en), insbesondere der Methyl-, Ethyl-, und Isopropylrest, besonders bevorzugt sind.

Beispiele für Reste $R^1$ sind die für den Rest R genannten Beispiele mit 1 bis 6 Kohlenstoffatom(en).

Bei Rest Q handelt es sich um zweiwertige Kohlenwasserstoffreste ausgewählt aus Alkylen- oder Cycloalkylenresten mit 2 bis 10 Kohlenstoffatomen.

Beispiele für Rest Q sind Ethylen-, n-Propylen-, iso-Propylen-, 1-n-Butylen-, 2-n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest und Decylenreste, wie der n-Decylenrest, sowie Cycloalkylenreste, wie Cyclopentylen-, Cyclohexylen-, Cycloheptylenreste und Methylcyclohexylenreste.

Besonders bevorzugt handelt es sich bei Q um den n-Propylenrest.

Beispiel für Halogenatom X ist Chlor, Brom oder Jod, wobei X bevorzugt die Bedeutung von Chloratom hat.

Bevorzugt handelt es sich bei Resten $R^2$ um $-(CH_2)_3Cl$, $-(CH_2)_3Br$, $-(CH_2)_4Cl$, $-(CH_2)_4Br$, $-(CH_2)_2CH(CH_3)Cl$, $-(CH_2)_5Cl$, wobei $-(CH_2)_3Cl$ besonders bevorzugt ist.

Bei den im erfindungsgemäßen Verfahren eingesetzten Organosiliciumverbindungen aus Einheiten der Formel (I) handelt es sich vorzugsweise um Silane der allgemeinen Formel

$R^6_d(R^7O)_eSiR^8_g$ (II)

und/oder deren Teilhydrolysate, wobei

- $R^6$ gleich oder verschieden sein kann und eine für R oben angegebene Bedeutung hat,
- $R^7$ gleich oder verschieden sein kann und eine für $R^1$ oben angegebene Bedeutung hat,
- $R^8$ gleich oder verschieden sein kann und eine für $R^2$ oben angegebene Bedeutung hat,
- d 0, 1, 2 oder 3, bevorzugt 0, 1 oder 2, besonders bevorzugt 1 oder 2, ist,
- e 0, 1, 2 oder 3, bevorzugt 1, 2 oder 3, besonders bevorzugt 1 oder 2, ist und
- g 1, 2 oder 3, bevorzugt 1 oder 2, besonders bevorzugt 1, ist,

mit der Maßgabe, daß die Summe aus d + e + g gleich 4 ist.

Beispiele für Silane der Formel (II), die im erfindungsgemäßen Verfahren eingesetzt werden können, sind $(CH_3)_3Si(CH_2)_3Cl$, $C_6H_5(CH_3)_2Si(CH_2)_3Br$, $(CH_3)_2(OH)Si(CH_2)_3Cl$, $(CH_3)_2(CH_3O)Si(CH_2)_3Cl$, $(CH_3)_2(C_2H_5O)Si(CH_2)_3Cl$, $(C_2H_5)_2(CH_3O)Si(CH_2)_4Cl$, $CH_3(CH_3O)_2Si(CH_2)_3Cl$,

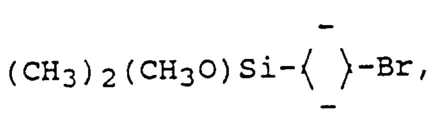

$CH_3(C_2H_5O)_2Si(CH_2)_3Cl$, $CH_2=CH(CH_3O)_2Si(CH_2)_4Cl$, $CH_3(C_3H_7O)_2Si(CH_2)_2CH(CH_3)Br$, $(CH_3O)_3Si(CH_2)_3Cl$, $(C_2H_5O)_3Si(CH_2)_4I$, $CH_3(CH_3O)Si[(CH_2)_3Cl]_2$, $(CH_3O)_2Si[(CH_2)_3Cl]_2$, $(CH_3O)_2Si[(CH_2)_4Br]_2$, $CH_3Si[(CH_2)_3I]_3$, $(CH_3O)Si[(CH_2)_3I]_3$, wobei $(CH_3)_2(HO)Si(CH_2)_3Cl$, $(CH_3)_2(CH_3O)Si(CH_2)_3Cl$, $(CH_3)_2(C_2H_5O)Si(CH_2)_3Cl$, $CH_3(CH_3O)Si[(CH_2)_3Cl]_2$, $CH_3(CH_3O)_2Si(CH_2)_3Cl$, $CH_3(C_2H_5O)_2Si(CH_2)_3Cl$, $C_6H_5(CH_3O)_2Si(CH_2)_3Cl$, $C_6H_5(C_2H_5O)_2Si(CH_2)_3Cl$, $(C_2H_5O)_3Si(CH_2)_3Cl$ und $(CH_3O)_3Si(CH_2)_3Cl$ bevorzugt und $(CH_3)_2(CH_3O)Si(CH_2)_3Cl$, $(CH_3)_2(C_2H_5O)Si(CH_2)_3Cl$, $(CH_3)(CH_3O)_2Si(CH_2)_3Cl$ und $(CH_3)(C_2H_5O)_2Si(CH_2)_3Cl$ besonders bevorzugt sind.

Bei den im erfindungsgemäßen Verfahren eingesetzten Organosiliciumverbindungen aus Einheiten der Formel (I) kann es sich aber auch um Organo(poly)siloxane handeln, wenn in den Einheiten der Formel (I) die Summe aus $a + b + c$ kleiner oder gleich 3 ist.

Falls es sich bei der erfindungsgemäß eingesetzten Organosiliciumverbindung aus Einheiten der Formel (I) um Organo(poly)siloxane handelt, ist a vorzugsweise durchschnittlich 0,5 bis 2,5, besonders bevorzugt durchschnittlich 0,9 bis 2,1, b vorzugsweise durchschnittlich 0 bis 0,5, besonders bevorzugt durchschnittlich 0 bis 0,3 und c vorzugsweise durchschnittlich 0,1 bis 1,5, besonders bevorzugt durchschnittlich 0,3 bis 1,0.

Beispiele für Organo(poly)siloxane, die im erfindungsgemäßen Verfahren eingesetzt werden können, sind lineare Organo(poly)siloxane, wie $O[Me_2Si(CH_2)_3Cl]_2$, $Me[Me_3SiO]_2Si(CH_2)_3Cl$, $Cl(CH_2)_3SiMe_2O[SiMe_2O]_5Me_2Si(CH_2)_3Cl$, $HOMe_2SiO[SiMe_2O]_{10}[MeSi((CH_2)_3Cl)O]_5Me_2SiOH$, $Me_3SiO[SiMe_2O]_7[MeSi((CH_2)_3Cl)O]_2SiMe_3$, $O[Me_2Si(CH_2)_4Cl]_2$, $Me_3SiOSiMe_2(CH_2)_3Cl$, cyclische Organo(poly)siloxane, wie $[OMeSi(CH_2)_3Cl]_{3-8}$, $[OMeSi(CH_2)_4Br]_{3-8}$, $[OMeSi(CH_2)_3Cl]_2[OMe_2Si]_2$, $[O(C_2H_5)Si(CH_2)_4Br]_2[OMe_2Si]_3$ sowie verzweigte Organo(poly)siloxane, wie $[Me_3SiO]_3Si(CH_2)_3Cl$, $<[Me_3SiO]_2Si(CH_2)_3Cl>_2O$, wobei $O[Me_2Si(CH_2)_3Cl]_2$, $HOMe_2SiO[SiMe_2O]_{10}[MeSi((CH_2)_3Cl)O]_5Me_2SiOH$ und $[Me_3SiO]_2MeSi(CH_2)_3Cl$ bevorzugt sind und $O[Me_2Si(CH_2)_3Cl]_2$ besonders bevorzugt ist, wobei Me gleich Methylrest ist.

Bei dem erfindungsgemäßen Verfahren können des weiteren Silane der allgemeinen Formel

$R^4{}_fSi(OR^5)_{4-f}$ (III)

und/oder deren Teilhydrolysate
eingesetzt werden, wobei

- $R^4$ gleich oder verschieden sein kann und eine für R angegebene Bedeutung hat,
- $R^5$ gleich oder verschieden sein kann und eine für $R^1$ angegebene Bedeutung hat und
- f 0, 1, 2 oder 3, bevorzugt 1, 2 oder 3, besonders bevorzugt 2 oder 3, ist.

Silan der Formel (III) und/oder dessen Teilhydrolysat wird insbesondere zusammen mit Organosiliciumverbindung aus Einheiten der Formel (I), welche pro Molekül mindestens einen Rest $R^1$ aufweist, eingesetzt.

Bei einer bevorzugten Ausführungsform des erfindungsgemäßen Verfahrens wird mindestens ein Silan der allgemeinen Formel

$R^6{}_d(R^7O)_eSiR^8{}_g$ (II)

und/oder dessen Teilhydrolysat,
wobei $R^6$, $R^7$, $R^8$, d, e und g eine der oben dafür angegebenen Bedeutungen haben, mit der Maßgabe, daß die Summe aus $d + e + g$ gleich 4 ist und e eine ganze Zahl verschieden 0 bedeutet,
und gegebenenfalls mindestens ein Silan der allgemeinen Formel

$R^4{}_fSi(OR^5)_{4-f}$ (III)

und/oder dessen Teilhydrolysat,
wobei $R^4$, $R^5$ und f eine der oben dafür angegebenen Bedeutungen haben,
mit Sulfit in Anwesenheit von Wasser umgesetzt.

Falls im erfindungsgemäßen Verfahren Silan der Formel (III) eingesetzt wird, wird es in Mengen von bevorzugt 5 bis 1200 Gewichtsprozent, besonders bevorzugt 20 bis 500 Gewichtsprozent, jeweils bezogen auf das Gesamtgewicht an Organosiliciumverbindung aus Einheiten der Formel (I), eingesetzt.

Organosiliciumverbindungen aus Einheiten der Formel (I) sind handelsübliche Verbindungen bzw. können nach in der Silicium-Chemie gängigen Methoden hergestellt werden. So können zum Beispiel chloralkylfunktionelle Organosiliciumverbindungen durch platinkatalysierte Hydrosilylierung von Allylchlorid mit den entsprechenden hydridofunktionellen Organosiliciumverbindungen hergestellt werden. Brom- und iodfunktionelle Organosiliciumverbindungen sind auf analogem Wege zugänglich, werden jedoch bevorzugt aus den entsprechenden Chlorverbindungen durch Austausch des Halogenatoms gewonnen. Als vorteilhaft erweist sich dabei eine phasentransferkatalysierte Reaktionsführung, wie sie für Silane von Y. Goldberg, V.

Dirnens und E. Lukevics in "Journal of Organometallic Chemistry Library", Bd. 20, 1988, Seite 219 bis 222 beschrieben ist.

Bei dem im erfindungsgemäßen Verfahren eingesetzten Sulfit handelt es sich vorzugsweise um bei 100 °C und 1013 hPa in Wasser zumindest zu 20 Gewichtsprozent, bezogen auf das Gesamtgewicht der Lösung, lösliche Verbindungen der Formel

$(M'_{v'})_2SO_3$ (IV),

wobei M' gleich oder verschieden sein kann und eine der für M oben angegebenen Bedeutungen, Proton ausgenommen, hat und v' gleich dem reziproken Wert der Ladung von M' ist.

Beispiele für M' sind die oben für M angegebenen Beispiele, Proton ausgenommen.

Bevorzugt handelt es sich bei Rest M' um Natriumion, Kaliumion oder Ammoniumion, wobei M' besonders bevorzugt Natriumion ist.

Beispiele für im erfindungsgemäßen Verfahren eingesetztes Sulfit sind $Na_2SO_3$, $(NH_4)_2SO_3$, $K_2SO_3$, $(NMe_4)_2SO_3$, $(NEt_3Benz)_2SO_3$, $(NMe_3H)_2SO_3$, $(NEtH_3)_2SO_3$, wobei $Na_2SO_3$, $K_2SO_3$ und $(NH_4)_2SO_3$ bevorzugt sind und $Na_2SO_3$ besonders bevorzugt ist und Me gleich Methylrest, Et gleich Ethylrest und Benz gleich Benzylrest ist.

Bei dem erfindungsgemäßen Verfahren wird Sulfit in Mengen von bevorzugt 0,8 Mol bis 1,5 Mol, besonders bevorzugt 0,9 Mol bis 1,1 Mol, insbesondere 1 Mol, jeweils bezogen auf ein Mol Rest X in der erfindungsgemäß eingesetzten Organosiliciumverbindung aus Einheiten der Formel (I), eingesetzt. Ein Mol Sulfit pro Mol Rest X der erfindungsgemäß eingesetzten Organosiliciumverbindung aus Einheiten der Formel (I) ist im allgemeinen völlig ausreichend, um eine homogene Reaktionsmasse und einen vollständigen Umsatz der Reste X zu erzielen. Mit einem Sulfitüberschuß wird jedoch schneller ein vollständiger Umsatz der Reste X erreicht.

Bei dem erfindungsgemäßen Verfahren wird Wasser vorzugsweise in Mengen von 50 bis 1000 Gewichtsprozent, besonders bevorzugt 200 bis 700 Gewichtsprozent, jeweils bezogen auf das Gewicht an Organosiliciumverbindung aus Einheiten der Formel (I), eingesetzt.

Des weiteren kann bei dem erfindungsgemäßen Verfahren noch zusätzlich wasserlösliches organisches Lösungsmittel, bevorzugt in Mengen von 0 bis 1000 Gewichtsprozent, besonders bevorzugt von 0 bis 500 Gewichtsprozent, jeweils bezogen auf das Gewicht an eingesetztem Wasser, eingesetzt werden.

Beispiele für wasserlösliche organische Lösungsmittel sind Methanol, Ethanol, Isopropanol, Ethylenglykol, Ethylenglykoldimethylether, Diethylenglykoldimethylether, Tetrahydrofuran, 1,4-Dioxan, N,N-Dimethylformamid, Dimethylsulfoxid oder Sulfolan sowie deren Gemische, wobei Methanol, Ethanol und Isopropanol bevorzugt sind und Ethanol besonders bevorzugt ist.

Zur Beschleunigung der erfindungsgemäßen Umsetzung kann bei dem erfindungsgemäßen Verfahren ein Katalysator eingesetzt werden. Bei dem erfindungsgemäßen Verfahren wird ein Katalysator vorzugsweise dann eingesetzt, wenn als Organosiliciumverbindung aus Einheiten der Formel (I) Silan der Formel (II) mit e gleich 0 oder Organo(poly)siloxan mit überwiegend apolaren organischen Resten eingesetzt wird.

Beispiele für im erfindungsgemäßen Verfahren einsetzbare Katalysatoren sind Phasentransferkatalysatoren, wie beispielsweise quartäre Ammonium- oder Phosphoniumverbindungen, Kronenether oder lineare Polyethylenglykoldiether: $NBu_4{}^+Cl^-$, $NBu_4{}^+Br^-$, $NBu_4{}^+HSO_4{}^-$, $NBu_4{}^+OAc^-$, $Et_3BenzN^+Cl^-$, $Oct_3MeN^+Cl^-$, $Bu_3BenzN^+Cl^-$, $C_{16}H_{33}NMe_3{}^+Cl^-$, $Ph_3EtP^+Cl^-$, $Ph_3BenzP^+Br^-$, $Bu_4P^+Cl^-$, [18]Krone-6, Dibenzo-[18]Krone-6, Dicyclohexyl-[18]-krone-6, $CH_3(OCH_2CH_2)_xOCH_3$ (z.B. x = 5, 11, 22), wobei $NBu_4{}^+Cl^-$, $NBu_4{}^+Br^-$, $NBu_4{}^+HSO_4{}^-$, $NBu_4{}^+OAc^-$, $Oct_3MeN^+Cl^-$, [18]Krone-6 und Dibenzo-[18]Krone-6 bevorzugt und $NBu_4{}^+Cl^-$, $NBu_4{}^+HSO_4{}^-$ und $Oct_3MeN^+Cl^-$ besonders bevorzugt sind, wobei Me gleich Methylrest, Bu gleich Butylrest, Ph gleich Phenylrest, Benz gleich Benzylrest und Oct gleich Octylrest bedeutet.

Falls beim erfindungsgemäßen Verfahren Katalysator eingesetzt wird, kann dieser in beliebigen Mengen, Vorzugsweise aber in Mengen von 0,1 bis 10 Molprozent, besonders bevorzugt von 1 bis 5 Molprozent, jeweils bezogen auf den Rest X in der erfindungsgemäß eingesetzten Organosiliciumverbindung aus Einheiten der Formel (I), eingesetzt werden.

Bei den einzelnen im erfindungsgemäßen Verfahren eingesetzten Bestandteilen kann es sich jeweils um eine Art derartiger Bestandteile wie auch um ein Gemisch aus mindestens Zwei Arten derartiger Bestandteile handeln.

Das erfindungsgemäße Verfahren wird vorzugsweise bei einer Temperatur von 20 °C bis 220 °C, besonders bevorzugt 50 bis 180 °C, und einem Druck zwischen bevorzugt 900 und 50 000 hPa, besonders bevorzugt zwischen 900 und 20 000 hPa, durchgeführt. Das erfindungsgemäße Verfahren kann jedoch auch bei höheren oder niedrigeren Drücken durchgeführt werden.

Bei dem erfindungsgemäßen Verfahren können die einzelnen erfindungsgemäß eingesetzten Bestandteile in beliebiger Reihenfolge miteinander vermischt werden.

Beim Einsatz von Organosiliciumverbindung aus Einheiten der Formel (I), welche hydrolysierbare Gruppen, wie beispielsweise Organyloxygruppen, aufweist bzw. beim Einsatz von Silan der Formel (III) und/oder dessen Teilhydrolysat wird bei dem erfindungsgemäßen Verfahren vorzugsweise die hydrolysierbare Organosiliciumverbindung nach Einstellung der gewünschten Reaktionsbedingungen langsam zu einem Gemisch der übrigen, erfindungsgemäß eingesetzten Bestandteile zudosiert.

Nach Beendigung des erfindungsgemäßen Verfahrens können die so erhaltenen Schwefel enthaltende organische Reste aufweisenden Organosiliciumverbindungen nach allen Verfahren, die auch bisher zur Isolierung von Schwefel enthaltende organische Reste aufweisenden Organosiliciumverbindungen angewendet wurden, isoliert werden. Nach Beendigung des erfindungsgemäßen Verfahrens können die erhaltenen Schwefel enthaltende organische Reste aufweisenden Organosiliciumverbindungen aber auch direkt weiteren Umsetzungen unterworfen werden. Je nach Zusammensetzung der Verbindungen können verschiedene Isoliermethoden angewendet werden. Werden zum Beispiel im erfindungsgemäßen Verfahren als Organosiliciumverbindung aus Einheiten der Formel (I) ausschließlich Silane der Formel (II) oder Organo(poly)siloxane, die an jedem Siliciumatom mindestens einen Rest $R^2$ mit $R^2$ gleich der obengenannten Bedeutung enthalten, eingesetzt, so erfolgt die Isolierung der Produkte vorzugsweise in der Weise, daß die Reaktionsmischungen nach dem Eindampfen mit Säuren, Vorzugsweise 37 %iger Salzsäure, im Gemisch mit wasserlöslichen organischen Lösungsmitteln, bezogen auf das Gewicht der konzentrierten Säure bevorzugt 100 bis 400 Gewichtsprozent, insbesondere Ethanol oder Isopropanol, behandelt werden, wodurch die Schwefel enthaltende organische Reste aufweisenden Organosiliciumverbindungen als Sulfonsäuren in Lösung gehen, während die als Nebenprodukte erhaltenen Salze, wie beispielsweise M'Cl mit M' gleich der obengenannten Bedeutung, ungelöst bleiben und somit abfiltriert werden können. Gegebenenfalls im Überschuß eingesetztes Sulfit ergibt bei der Säurebehandlung schwefelige Säure, die sich beim Eindampfen der produktenthaltenden Lösung bei vorzugsweise 50 bis 100 °C und 5 bis 50 Pa unter $SO_2$-Abgabe zersetzt. Eine Variante der beschriebenen Aufarbeitungsmethode bietet sich an, wenn die erfindungsgemäße Umsetzung mit dem bevorzugten $Na_2SO_3$ durchgeführt wird: In diesem Fall wird das Reaktionsgemisch ohne vorhergehendes Eindampfen mit gasförmigem Chlorwasserstoff gesättigt, wobei NaCl, quantitativ ausfällt, wenn auf 0 °C gekühlt wird. Nach Filtration wird die Produkt enthaltende Lösung analog wie oben beschrieben eingedampft. Die so erhaltenen Produkte sind Sulfonsäuregruppen aufweisende Silane, Organo(poly)siloxane oder sog. "Silasultone". Letztere können insbesondere beim Eindampfen von Reaktionsmischungen, die durch Umsetzung von Organosiloxanen aus Einheiten der Formel (I) mit $a=2$, $b=0$, $c=1$ oder von Organosilanen der Formel (II) mit $d=2$, $e=1$, $g=1$ erhalten werden, isoliert werden.

Werden nach dem erfindungsgemäßen Verfahren Organo(poly)siloxane aus Einheiten der Formel (I), deren durchschnittlicher Wert c deutlich kleiner l ist, oder ein Gemisch von Silanen der Formel (II) und (III) mit Sulfit umgesetzt, so erfolgt die Isolierung der Schwefel enthaltende organische Reste aufweisenden Organosiliciumverbindung bevorzugt in der Weise, daß das Reaktionsgemisch nach beendeter Umsetzung eingedampft wird und aus dem so erhaltenen Rückstand die Produkte mit Hilfe eines organischen Lösungsmittels extraktiv abgetrennt werden. Die Polarität des organischen Lösungsmittels richtet sich nach der Anzahl an Sulfonatgruppen in der Organosiliciumverbindung. Bevorzugt sind Alkohole wie Ethanol oder Isopropanol.

Nach dem erfindungsgemäßen Verfahren erhaltene Schwefel enthaltene organische Reste aufweisende Organosiliciumverbindungen können auch vor der Isolierung noch modifiziert werden. Enthält beispielsweise das Produktgemisch Organo(poly)siloxane, die an jedem Si-Atom eine C-gebundene Sulfonatgruppe aufweisen, so lassen sich diese durch Umsetzung dieses Produktgemisches mit Silanen der Formel (III) sehr einfach modifizieren. Die Isolierung der so erhaltenen Produkte kann dann wie oben beschrieben extraktiv erfolgen, wobei sich eine Säurebehandlung erübrigt.

Das Kation der bei dem erfindungsgemäßen Verfahren erhaltenen Organosiliciumverbindung, die mindestens einen organischen Rest mit einer Sulfonatgruppe $-SO_3M_v$ mit M und v gleich der obengenannten Bedeutung aufweist, kann auf einfache Weise beliebig variiert werden. Beispielsweise kann im Fall von M gleich Metallkation oder Rest der Formel (V) die erfindungsgemäß hergestellte Organosiliciumverbindung mit Säure, wie beispielsweise Schwefelsäure oder Salzsäure, oder einem sauren Ionenaustauscher behandelt werden, wobei Organosiliciumverbindungen mit $-SO_3H$ Gruppierungen erhalten werden, oder mit einem Ionenaustauscher die Kationen M durch beliebige andere Kationen ersetzt werden. Ist in der erfindungsgemäß hergestellten Organosiliciumverbindung M gleich Proton, so kann mit Base neutralisiert werden, wobei Organosiliciumverbindungen erhalten werden, die eine $-SO_3M''$ Gruppe mit M'' gleich einer der für M' angegebenen Bedeutungen aufweisen.

Das erfindungsgemäße Verfahren hat den Vorteil, daß Organosiliciumverbindungen, die mindestens einen über Kohlenstoff an Silicium gebundenen Rest mit einer Sulfonatgruppe oder einer ringförmig gebundenen Gruppierung $-SO_2-O-$ aufweisen, auf einfache Art und Weise hergestellt werden können. Des weiteren hat das erfindungsgemäße Verfahren den Vorteil, daß toxikologisch unbedenkliche, problemlos verfügbare und kostengünstige Ausgangsverbindungen eingesetzt werden. So können bei dem erfindungsgemäßen Verfahren bevorzugt Organosiliciumverbindungen, die chlorsubstituierte organische Reste aufweisen, eingesetzt werden, ohne daß niedrige Reaktionsgeschwindigkeiten in Kauf genommen werden müssen.

Weitere Vorteile des erfindungsgemäßen Verfahrens sind die hohen Ausbeuten an Schwefel enthaltende organische Reste aufweisenden Organosiliciumverbindungen, die bei über 90 % liegen. Darüberhinaus ist es von Vorteil, daß bei dem erfindungsgemäßen Verfahren relativ einfache Aufarbeitungs- und Isoliermethoden gewählt werden können.

Die Konsistenz der nach dem erfindungsgemäßen Verfahren hergestellten Schwefel enthaltene organische Reste aufweisenden Organosiliciumverbindungen reicht abhängig von der Art der eingesetzten Organosiliciumverbindung sowie des Kations im Fall von Sulfonatgruppen von Flüssigkeiten bis zu Feststoffen. Werden im erfindungsgemäßen Verfahren als Organosiliciumverbindung aus Einheiten der Formel (I) Silane der Formel (II) mit e gleich 0 eingesetzt, werden Sulfonatgruppen aufweisende Silane erhalten. Werden im erfindungsgemäßen Verfahren als Organosiliciumverbindung aus Einheiten der Formel (I) Silane der Formel (II) mit e verschieden 0 eingesetzt, werden Organo(poly)siloxane erhalten, die an jedem Si-Atom einen eine Sulfonatgruppe enthaltenden organischen Rest aufweisen oder abhängig von den Bedingungen eine ringförmig gebundene Gruppierung $-SO_2-O-$ haben. Werden im erfindungsgemäßen Verfahren als Organosiliciumverbindung aus Einheiten der Formel (I) Silane der Formel (II) mit e verschieden 0 und Silane der Formel (III) und/oder deren Teilhydrolysate eingesetzt, erhält man Organo(poly)siloxane, die je nach Art und Einsatzmenge der einzelnen Silane aus unterschiedlichen Siloxan-Einheiten aufgebaut sind. Entsprechende Organo(poly)siloxane werden erhalten, wenn das Produktgemisch der erfindungsgemäßen Umsetzung von Silanen der Formel (II) mit e verschieden 0 nach der nucleophilen Substitution aber vor der Aufarbeitung mit Silanen der Formel (III) und/oder deren Teilhydrolysaten umgesetzt wird.

Ist der Anteil der polaren Reste in den nach dem erfindungsgemäßen Verfahren hergestellten Organosiliciumverbindungen ausreichend hoch, so sind sie wasserlöslich.

Die nach dem erfindungsgemäßen Verfahren erhaltenen Organosiliciumverbindungen, die mindestens einen über Kohlenstoff an Silicium gebundenen Rest mit einer Sulfonatgruppe oder einer ringförmig gebundenen Gruppierung $-SO_2-O-$ aufweisen, können, falls erwünscht, mit mindestens einem Organo(poly)siloxan (1) äquilibriert werden. Die Äquilibrierung kann nach in der Siliciumchemie üblichen Verfahren durchgeführt werden.

Als Organo(poly)siloxan (1), mit dem die erfindungsgemäß hergestellte Organosiliciumverbindung gegebenenfalls äquilibriert wird, werden vorzugsweise solche aus Einheiten der allgemeinen Formel

$$R^9_i(R^{10}O)_hSiO_{(4-i-h)/2} \quad (VI),$$

wobei

- $R^9$ gleich oder verschieden sein kann und Wasserstoffatom oder einwertigen organischen Rest bedeutet,
- $R^{10}$ gleich oder verschieden sein kann und eine für $R^1$ angegebene Bedeutung hat,
- i 0, 1, 2 oder 3 und
- h 0, 1, 2 oder 3 ist,

mit der Maßgabe, daß die Summe aus i und h kleiner oder gleich 3 ist,
eingesetzt.

Beispiele für Organopolysiliciumverbindungen (1) sind lineare, endständige Triorganosiloxygruppen aufweisende Organo(poly)siloxane mit 2 bis 200 Silicium-Einheiten, lineare, endständige Hydroxylgruppen aufweisende Organo(poly)siloxane mit 2 bis 200 Silicium-Einheiten und cyclische Organo(poly)siloxane mit 3 bis 12 Silicium-Einheiten.

Falls die erfindungsgemäße Schwefel enthaltende organische Reste aufweisende Organosiliciumverbindung mit Organo(poly)siloxanen (1), die mindestens einen organischen Rest mit Aminofunktion aufweisen, äquilibriert wird, werden Organosiliciumverbindungen erhalten, die pro Molekül sowohl einen organischen Rest mit einer $-SO_3^-$ Gruppierung als auch einen aminofunktionellen organischen Rest enthalten und somit zwitterionische Struktur aufweisen.

Beispiele für aminofunktionelle Organo(poly)siloxane (1), mit denen die erfindungsgemäßen Organosiliciumverbindungen gegebenenfalls äquilibriert werden können, sind

$A\text{-}SiMe_2\text{-}[OSiMe_2]_xOSiMe_2\text{-}A$ mit $A = -(CH_2)_3NH_2$ und $x = 0$ bis 20,

$A\text{-}SiMe_2\text{-}[OSiMe_2]_xOSiMe_2\text{-}A$ mit $A = -(CH_2)_3NH(CH_2)_2NH_2$ und $x = 0$ bis 20,

$Me_3Si[OSiMe_2]_y[OSiMe]_zOSiMe_3$
|
A

mit $A = -(CH_2)_3NH_2$, $y = 0$ bis 20 und $z = 1$ bis 15,

$Me_3Si[OSiMe_2]_y[OSiMe]_zOSiMe_3$
|
A

mit $A = -(CH_2)_3NH(CH_2)_2NH_2$ $y = 0$ bis 20 und $z = 1$ bis 15,

$H[OSiMe_2]_y[OSiMe]_zOH$
|
A

mit $A = -(CH_2)_3NH_2$, $y = 0$ bis 20 und $z = 2$ bis 20,

$H[OSiMe_2]_y[OSiMe]_zOH$
|
A

mit $A = -(CH_2)_3NH(CH_2)_2NH_2$ $y = 0$ bis 20 und $z = 2$ bis 20,

$[OSiMe]_k$
|
A

mit $A = -(CH_2)_3NH_2$ und $k = 3$ bis 12 und

$[OSiMe]_k$
|
A

mit $A = -(CH_2)_3NH(CH_2)_2NH_2$ und $k = 3$ bis 12,

wobei Me für den Methylrest steht.

Die Menge und Art der in der gegebenenfalls durchgeführten Äquilibrierungsstufe des erfindungsgemäßen Verfahrens eingesetzten Organopolysiliciumverbindung (1) wird lediglich durch den gewünschten Anteil an Schwefel enthaltenden organischen Resten in der in der gegebenenfalls durchgeführten Äquilibrierungsstufe des erfindungsgemäßen Verfahrens erzeugten Organosiliciumverbindung und durch die gewünschte mittlere Kettenlänge bestimmt.

Enthält die zu äquilibrierende, nach dem erfindungsgemäßen Verfahren erzeugte Organosiliciumverbindung freie Sulfonsäuregruppen oder sog. Silasultongruppierungen, die durch Wasserzugabe spontan Sulfonsäuregruppen bilden, so fördern diese selbst die Äquilibrierung, weshalb in diesem Fall kein zusätzlicher Äquilibrierungskatalysator erforderlich ist. Diese Verfahrensweise ist bevorzugt.

Im Falle von Organosiliciumverbindungen mit neutralisierten Sulfonsäuregruppen wird die gegebenenfalls durchgeführte Äquilibrierung vorzugsweise in Anwesenheit von die Äquilibrierung fördernden Katalysatoren durchgeführt. Beispiele für solche Katalysatoren sind basische Katalysatoren, wie beispielsweise

Alkalihydroxide, wie Natriumhydroxid und Kaliumhydroxid, Trimethylbenzylammoniumhydroxid, Tetramethylammoniumhydroxid und Kaliumtrimethylsilanolat, sowie saure Katalysatoren, wie zum Beispiel Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat, wobei basische Katalysatoren generell bevorzugt sind.

Falls Äquilibrierungskatalysator eingesetzt wird, wird er vorzugsweise in Mengen von 0,005 bis 0,5 Gewichtsprozent, insbesondere 0,02 bis 0,1 Gewichtsprozent, jeweils bezogen auf das Gesamtgewicht der eingesetzten Organosiliciumverbindungen, verwendet.

Die gegebenenfalls durchgeführte Äquilibrierung wird vorzugsweise bei 80 °C bis 150 °C und beim Druck der umgebenden Atmosphäre, also zwischen 900 und 1100 hPa durchgeführt. Falls erwünscht, können aber auch höhere oder niedrigere Drücke angewendet werden.

Des weiteren können die nach dem erfindungsgemäßen Verfahren hergestellten Organosiliciumverbindungen, sofern sie Organyloxygruppen oder Hydroxygruppen aufweisen, der Hydrolyse bzw. Kondensation unterworfen werden. Hydrolyse bzw. Kondensation von Organosiliciumverbindungen mit Organyloxygruppen bzw. Hydroxygruppen sind bereits vielfach bekannt. Beispielsweise können die erfindungsgemäßen Organosiliciumverbindungen mit Hydroxylgruppen aufweisenden linearen oder cyclischen Organosiliciumverbindungen, wie zum Beispiel $\alpha,\omega$-Dihydroxydimethyl(poly)siloxan, in Anwesenheit von Katalysator, wie zum Beispiel Organozinnverbindungen, Titan- und Zirkonester, quaternären Stickstoffbasen, sowie Mineralsäuren, und gegebenenfalls in Anwesenheit von Lösungsmittel umgesetzt werden. Hydrolyse und Kondensation werden dabei vorzugsweise zwischen 23 und 150 °C, besonders bevorzugt zwischen 60 und 120 °C und einem Druck zwischen 900 und 1100 hPa durchgeführt.

Nach dem erfindungsgemäßen Verfahren hergestellte Organosiliciumverbindungen mit cyclischen Gruppierungen

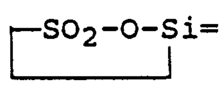

können mit Organosilanen oder Organo(poly)siloxanen (1), die Si-gebundene Hydroxylgruppen aufweisen auch ohne Katalysator umgesetzt werden. Dabei werden unter Ringöffnung Sulfonatgruppen enthaltende Organosiliciumverbindungen erhalten. Auf diese Weise sind zum Beispiel ausgehend von $\alpha$-Hydroxy-$\omega$-trimethylsilyldimethyl(poly)siloxan durch Umsetzung mit 4,4-Dimethyl-4-silabutansulton-1,4 selektiv nur an einem Kettenende Sulfonatgruppen aufweisende organische Reste enthaltende Organosiliciumverbindungen leicht zugänglich.

Das erfindungsgemäße Verfahren kann absatzweise, halbkontinuierlich oder vollkontinuierlich durchgeführt werden.

Die erfindungsgemäß hergestellten, Sulfonatgruppen aufweisenden Organosiliciumverbindungen weisen ein breites Anwendungsspektrum auf. Sie können für alle Zwecke eingesetzt werden, für die auch bisher Sulfonatgruppen aufweisende Organosiliciumverbindungen eingesetzt worden sind. Da die erfindungsgemäß hergestellten, Sulfonatgruppen aufweisenden Organosiliciumverbindungen bevorzugt sowohl hydrophile als auch hydrophobe Gruppen tragen, weisen diese Verbindungen starke oberflächenaktive Eigenschaften auf. Sie eignen sich deshalb hervorragend als Emulgiermittel wie auch zur Herabsetzung der Oberflächenspannung in wäßrigen Medien, weshalb sie abhängig von ihrer Zusammensetzung und dem Einsatzmedium entweder als Schaumbildner oder Entschäumer fungieren können.

Metallische Oberflächen, die ständig mit korrosiven wässrigen Lösungen in Berührung stehen, können durch Behandlung mit Sulfonatgruppen aufweisenden Organosiliciumverbindungen vor Korrosion geschützt werden.

Glas- und Keramikoberflächen lassen sich mit sulfonatfunktionellen Organosiliciumverbindungen dauerhaft hydrophilieren, wobei die nach dem erfindungsgemäßen Verfahren herstellbaren Silasultone, bzw. Organo(poly)siloxane mit Silasulton-Gruppierungen wegen ihrer hohen Reaktivität gegen Nucleophilen besonders geeignet sind.

In den nachstehend beschriebenen Beispielen beziehen sich alle Viskositätsangaben auf eine Temperatur von 25 °C. Sofern nicht anders angegeben, werden die nachstehenden Beispiele bei einem Druck der umgebenden Atmosphäre, also etwa bei 1000 hPa, und bei Raumtemperatur, also bei etwa 23 °C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

Es werden die folgenden Abkürzungen verwendet:

Me: Methylrest

Et: Ethylrest

**Beispiel 1**

Eine Mischung von 40 g 1,3-Bis(3-chlorpropyl)tetramethyldisiloxan (0,139 mol) und einer Lösung von 39 g Natriumsulfit und 2,4 g Tetrabutylammoniumhydrogensulfat in 200 ml Wasser wird in einem Autoklaven (Innenvolumen 750 ml) auf 180 °C erhitzt, wobei sich ein Druck von ca. 1,3 MPa einstellt, und bei dieser Temperatur 20 Stunden gerührt. Anschließend wird auf Raumtemperatur abgekühlt - der Druck im Inneren des Autoklaven entspricht nun wieder in etwa dem umgebenden Atmosphärendruck - und der Autoklav entleert. Das homogene, klare Reaktionsgemisch wird bei 60 °C und 50 Pa bis zur Trockene eingeengt. Der so erhaltene weiße Feststoff wird bei 0 °C mit 35 ml konzentrierter Salzsäure (37 %ig in Wasser) und 75 ml Isopropanol versetzt, das dabei ausgefallene Natriumchlorid abfiltriert und das Filtrat von den flüchtigen Bestandteilen bei 60 °C und 10 Pa befreit. Der ölige Rückstand wird unter sorgfältigem Ausschluß von Feuchtigkeit mit 100 ml wasserfreiem Toluol auf 80 °C erwärmt, dann wird die Lösung filtriert und das Lösungsmittel unter vermindertem Druck (60 °C, 30 Pa) entfernt. Innerhalb weniger Stunden bei Raumtemperatur kristallisiert der Rückstand zu einem gelbbraunen Feststoff, der sich NMR-spektroskopisch eindeutig als cyclisches Silan der Formel

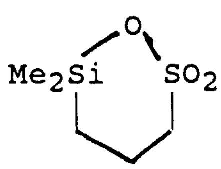

identifizieren läßt. Durch Vakuumdestillation (30 Pa) erhält man bei einer Blasentemperatur von ca. 125 °C 46,7 g (93 % der Theorie) hochreines 4,4-Dimethyl-4-silabutansulton-1,4 als farblosen Feststoff, der bei 63 °C schmilzt und dessen Schmelze bei einem Druck von 20 Pa bei 105 °C siedet. Die Verbindung ist hygroskopisch und hydrolysiert an feuchter Luft rasch zu

$O[Me_2Si(CH_2)_3SO_3H]_2$.

**Beispiel 2**

10 g 3-Chlorpropyldimethylmethoxysilan (0,060 mol) werden innerhalb von 2 Stunden kontinuierlich unter intensivem Rühren zu einer siedenden Lösung von 8,3 g Natriumsulfit in 50 ml Wasser zudosiert. Anschließend wird noch weitere 12 Stunden unter Rückfluß gerührt. Nach Abkühlung auf Raumtemperatur wird die leicht trübe Lösung mit 20 ml Diethylether versetzt, die klare Wasserphase abgetrennt und im Wasserstrahlvakuum eingedampft. Der zurückbleibende weiße Feststoff wird bei 0 °C in 15 ml konzentrierter Salzsäure (37 %ig in Wasser) und 20 ml Ethanol aufgenommen, die Lösung filtriert und im Ölpumpenvakuum (20 Pa) bei 65 °C eingedampft. Das so erhaltene hellgelbe Öl kristallisiert beim Abkühlen auf Raumtemperatur. Mit einem Schmelzpunkt von 63 °C und einem Siedepunkt von 106 °C bei 20 Pa handelt es sich bei der Substanz um 4,4-Dimethyl-4-silabutansulton-1,4 wie in Beispiel 1. Die Ausbeute beträgt 10,2 g oder 94 % bezogen auf das eingesetzte Silan.

**Beispiel 3**

Eine Lösung von 25 g 4,4-Dimethyl-4-silabutansulton-1,4 aus Beispiel 1 und 50 g Siloxan der Formel $HO[Me_2SiO]_{15}H$ in einem Gemisch aus 50 ml Ethylenglykoldimethylether und 2,5 ml Wasser wird 4,5 Stunden bei 80 °C gerührt. Nach Abkühlung auf Raumtemperatur werden innerhalb von 15 Minuten unter Rühren 30 g Triethylamin zudosiert. Zur Beseitigung bzw. Aufhellung der bei der Aminzugabe auftretenden orangebraunen Färbung wird das Reaktionsgemisch noch 2 Stunden mit 5 g Aktivkohle bei Raumtemperatur gerührt und anschließend die Aktivkohle wieder abfiltriert. Nach Entfernung der flüchtigen Bestandteile bei 55 °C im Vakuum (20 Pa) werden 85,8 g klares, schwach gelbes Öl mit einer Viskosität von 1550 $mm^2s^{-1}$ erhalten, dessen Zusammensetzung der Formel

$Et_3NH^{+-}O_3S(CH_2)_3SiMe_2O[Me_2SiO]_{9,5}Me_2Si(CH_2)_3SO_3^{-+}HNEt_3$

entspricht.

Aufgrund der Dissoziation der Ammoniumsulfonatgruppen reagiert eine wäßrige Lösung der Substanz sauer (pH 4 bei 1 %iger Lösung). Als Folge davon tritt Zersetzung ein, erkennbar an langsamer Trübung der anfangs klaren Lösung. Die Zersetzung läßt sich vermeiden, wenn der pH-Wert der Lösung durch Basenzusatz ($NEt_3$, $Na_2CO_3$, NaOH etc.) auf 7 bis 10 eingestellt wird. Eine mit Triethylamin neutralisierte einprozentige wäßrige Lösung besitzt eine Oberflächenspannung von $3{,}4 \cdot 10^{-2}$ $Nm^{-1}$.

**Beispiel 4**

Analog zu der in Beispiel 3 beschriebenen Arbeitsweise erhält man ausgehend von einer Lösung von 10 g 4,4-Dimethyl-4-silabutansulton-1,4 aus Beispiel 1 und 107 g eines Polysiloxans der durchschnittlichen Zusammensetzung $HO[Me_2SiO]_{15}H$ in 100 ml Ethylenglykoldimethylether, dem 1 ml Wasser beigemischt ist, nach Neutralisation der primär gebildeten Sulfonsäuregruppen mit 8 g Triethylamin 115,5 g leicht gelbstichiges Öl ($\nu$ = 1430 $mm^2s^{-1}$) der Formel

$Et_3NH^{+-}O_3S(CH_2)_3SiMe_2O[Me_2SiO]_{50}Me_2Si(CH_2)_3SO_3^{-+}HNEt_3$.

**Beispiel 5**

100 g 3-Chlorpropyldimethoxymethylsilan (0,547 mol) werden innerhalb von 8 Stunden kontinuierlich unter heftigem Rühren zu einer siedenden Lösung von 75,9 g Natriumsulfit in 500 ml Wasser zudosiert. Anschließend wird noch weitere 2 Stunden unter Rückfluß gerührt. Beim Abkühlen auf Raumtemperatur scheidet sich auf dem Wasser eine dünne organische Phase ab, die hauptsächlich aus methoxyterminierten Poly(3-chlorpropylmethyl)siloxanen besteht. Diese nicht wassermischbare Schicht (3,1 g) wird im Scheidetrichter abgetrennt und die Wasserphase bei 65 °C im Wasserstrahlvakuum auf die Hälfte ihres ursprünglichen Volumens eingeengt. Bei 0 °C wird dann in die wäßrige Lösung bis zur Sättigung HCl-Gas eingeleitet, das ausgefallene Salz wird abfiltriert und das Filtrat zunächst im Wasserstrahlvakuum eingeengt, dann bei 80 °C und einem Druck von 10 Pa ausgeheizt. Der so erhaltene klare, nahezu farblose, hochviskose Rückstand besteht zu ca. 98 % aus Einheiten der Formel

$OSiMe(CH_2)_3SO_3H$.

Ausbeute: 89,5 g (89,7 % bezogen auf eingesetztes Silan).

**Beispiel 6**

Eine Dispersion von 100 g 3-Chlorpropyldiethoxymethylsilan (0,474 mol) und 65,8 g Natriumsulfit in einem Gemisch aus 500 ml Wasser und 100 ml Ethanol wird 22 Stunden unter kräftigem Rühren am Rückfluß gekocht. Nach Abkühlung des Reaktionsgemisches auf Raumtemperatur separieren sich zwei Phasen. Die spezifisch leichtere Phase (14,3 g) besteht vorwiegend aus ethoxyterminierten Poly(3-chlorpropylmethyl)siloxanen und Ethanol. Die wäßrige Phase wird im Wasserstrahlvakuum eingedampft. Der zurückbleibende weiße Feststoff wird in einem Gemisch aus 100 ml 37 %iger Salzsäure in Wasser und 150 ml Ethanol dispergiert und diese Dispersion nach Abkühlung auf 0 °C filtriert. Das Filtrat wird zunächst im Wasserstrahlvakuum eingeengt, dann bei 65 °C im Ölpumpenvakuum (10 Pa) ausgeheizt. Das so erhaltene hochviskose, honigartige Produkt ist ein Polysiloxan, das zu knapp 97 % aus Einheiten der Formel $OSiMe(CH_2)_3SO_3H$ und zu etwa 3 % aus Einheiten der Formel $OSiMe(CH_2)_3Cl$ aufgebaut ist.

Ausbeute: 71,6 g (83,4 % bezogen auf eingesetztes Silan).

**Beispiel 7**

8,13 g Octamethylcyclotetrasiloxan, 1,24 g Hexamethyldisiloxan und 5 g Poly(3-sulfonylpropylmethyl)-siloxan aus Beispiel 5 werden in 15 ml Ethylenglykoldimethylether gelöst und 5 Stunden bei 80 °C gerührt. Anschließend wird die Reaktionsmischung auf 50 °C abgekühlt und mit 3,5 g Triethylamin versetzt. Nach Entfernung der flüchtigen Bestandteile bei 50 °C und einem Druck von 30 Pa werden 16,1 g hellgelbes Öl der durchschnittlichen Zusammensetzung

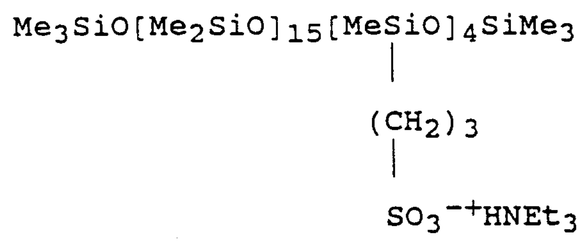

erhalten. Die Substanz ist wasserlöslich, die Lösung trübt sich jedoch innerhalb einiger Stunden. Ursache dafür ist die Dissoziation der Ammoniumsulfonatgruppen, deren saure Reaktion Zersetzungsreaktionen auslöst. Die wäßrige Lösung bleibt stabil, wenn die Dissoziation der Ammoniumsulfonatgruppen durch Basenzugabe zurückgedrängt und ein pH-Wert zwischen 7 und 10 eingestellt wird. Im stark Alkalischen (pH > 10) tritt ebenfalls Trübung ein.

**Beispiel 8**

Die in Beispiel 7 beschriebene Äquilibrierungsreaktion wird wiederholt mit der Abänderung, daß anstelle des Triethylamins mit 10 g 29 %iger wäßriger Sodalösung neutralisiert wird. Nach Abzug der flüchtigen Bestandteile erhält man 14 g weißen Feststoff der Formel

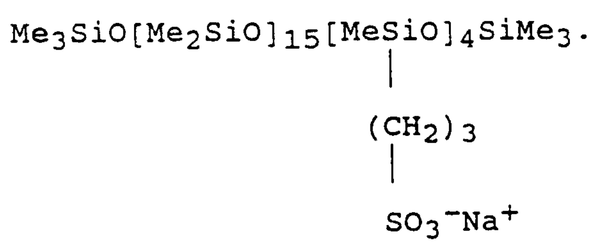

Eine wäßrige Lösung der Verbindung reagiert neutral und bleibt auch über einen längeren Zeitraum unverändert klar.

**Beispiel 9**

Die in Beispiel 7 beschriebene Äquilibrierungsreaktion wird wiederholt mit der Abänderung, daß zur Neutralisation der Sulfonsäuregruppen anstelle des Triethylamins 13,3 g eines aminofunktionellen Polydimethylsiloxans der durchschnittlichen Zusammensetzung $H_2N(CH_2)_3Me_2SiO[Me_2SiO]_{10}SiMe_2(CH_2)_3NH_2$ - (0,013 mol) verwendet werden. Nach Entfernung des Lösungsmittels und anderer flüchtiger Komponenten bei 50 °C und 30 Pa verbleiben 26,6 g hellgelbes, hochviskoses Öl der Formel

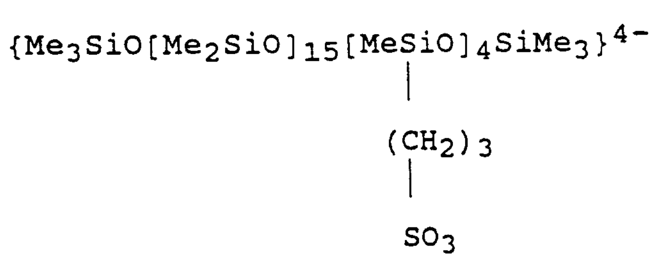

$\{H_3N(CH_2)_3Me_2SiO[Me_2SiO]_{10}SiMe_2(CH_2)_3NH_3\}^{2+}{}_2$.

**Beispiel 10**

Eine Lösung von 5,3 g Poly(3-sulfonylpropylmethyl)siloxan, hergestellt nach Beispiel 5, 13,4 g Octamethylcyclotetrasiloxan und 0,71 g 1,3-Divinyl-1,1,3,3-tetramethyldisiloxan in 15 ml Ethylenglykoldimethylether wird 10 Stunden bei 80 °C gerührt. Nach Abkühlung auf Raumtemperatur werden 29,6 g einer 25 %igen Lösung von Tetrabutylammoniumhydroxid in Methanol zugegeben. Lösungsmittel und flüchtige Verbindungen werden bei 60 °C und 20 Pa entfernt. Zurück bleiben 24,5 g hellgelbe, breiartige, wasserlösliche Masse der durchschnittlichen Zusammensetzung

$$H_2C{=}CHMe_2SiO[Me_2SiO]_{57}[\underset{\underset{\underset{\displaystyle SO_3^{-}{}^{+}N(C_4H_9)_4}{|}}{\underset{\displaystyle (CH_2)_3}{|}}}{MeSiO}]_{10}SiMe_2HC{=}CH_2.$$

**Beispiel 11**

20 g Poly(3-sulfonylpropylmethyl)siloxan, das nach dem in Beispiel 5 beschriebenen Verfahren synthetisiert wurde, und 90 g Hexamethyldisiloxan werden bei 80 °C in 200 ml Ethylenglykoldimethylether gelöst und bei dieser Temperatur 15 Stunden gerührt. Anschließend wird auf Raumtemperatur abgekühlt und das Reaktionsgemisch in zwei Gefäße volumengleich aufgeteilt. Der Inhalt des einen Gefäßes wird unter Rühren mit 7 g Triethylamin versetzt, in die im anderen Gefäß befindliche Lösung wird so lange Ammoniakgas eingeleitet, bis sie deutlich alkalisch reagiert. Beide Lösungen werden dann bei 50 °C und einem Druck von 20 Pa eingedampft. Die dabei erhaltenen Produkte (23,7 g hellgelbes Öl bei Neutralisation mit $NEt_3$, 18,4 g orangefarbene, pastöse Substanz bei Neutralisation mit $NH_3$) bestehen hauptsächlich aus 3-Sulfonatopropyl-1,1,1,3,5,5,5-heptamethyltrisiloxan, daneben enthalten sie aber auch geringe Anteile 3,5-Bis(3-sulfonatopropyl)-1,1,1,3,5,7,7,7-octamethyltetrasiloxan. Ihre durchschnittliche Zusammensetzung entspricht der Formel

$$Me_3SiO[\underset{\underset{\underset{\displaystyle SO_3^{-}{}^{+}HNR'_3}{|}}{\underset{\displaystyle (CH_2)_3}{|}}}{MeSiO}]_{1,1}SiMe_3$$

R' = H bzw. Et

1 %ige wäßrige Lösungen der Verbindungen besitzen eine Oberflächenspannung von $2 \cdot 10^{-2}$ $Nm^{-1}$.

**Beispiel 12**

7,3 g 3-Chlorpropyldimethoxymethylsilan (0,040 mol) werden bei 100 °C unter heftigem Rühren innerhalb von 1 Stunde zu einer Lösung von 5 g Natriumsulfit in 30 ml Wasser getropft. Anschließend wird die Mischung noch 45 Minuten unter Rückfluß gekocht. Die nun nahezu klare Lösung wird auf 80 °C abgekühlt und mit 60 ml Ethanol und 0,5 g Kaliumhydroxid versetzt. Bei Siedetemperatur werden dann unter intensivem Rühren im Laufe von 3 Stunden 111,2 g einer Mischung bestehend aus 110 g Dimethoxydimethylsilan (0,915 mol) und 1,2 g Trimethylmethoxysilan (0,012 mol) zudosiert. Anschließend wird auf Raumtemperatur abgekühlt, mit 9 ml 1n-Salzsäure neutralisiert und im Ölpumpenvakuum (20 Pa) bei 60 °C eingedampft. Der Rückstand wird in 200 ml Toluol gelöst, die Lösung filtriert und das Filtrat unter denselben Bedingungen wie oben eingedampft. Dabei werden 72,1 g einer farblosen pastösen Substanz der durchschnittlichen Zusammensetzung

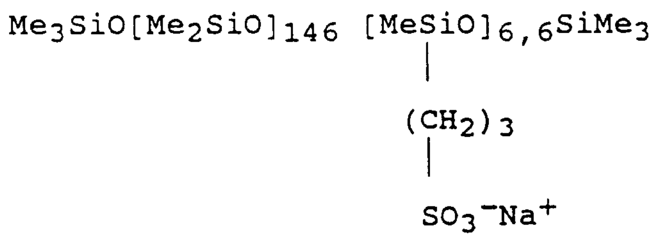

erhalten.

**Beispiel 13**

Eine Mischung von 12 g eines α-Hydroxy-ω-trimethylsilyldimethylpolysiloxans der durchschnittlichen Zusammensetzung $Me_3SiO[Me_2SiO]_{15}$ $Me_2SiOH$ (9,4 mmol) und 1,3 g Triethylamin wird bei Raumtemperatur innerhalb von 20 Minuten mit einer Lösung von 1,7 g reinem 4,4-Dimethyl-4-silabutansulton-1,4, hergestellt nach Beispiel 1, in 70 ml Diethylether versetzt. Anschließend werden die flüchtigen Bestandteile im Ölpumpenvakuum (10 Pa) bei 40 °C entfernt. Das zurückbleibende hellgelbe Öl (14,2 g) besitzt die durchschnittliche Zusammensetzung

$Me_3SiO[Me_2SiO]_{16}$ $Me_2Si(CH_2)_3SO_3{}^-HNEt_3{}^+$.

**Beispiel 14**

Eine Lösung von 20 g Poly(3-sulfonylpropylmethyl)siloxan, hergestellt nach Beispiel 5, 230 g eines Polydimethylsiloxans der Formel $HO[SiMe_2O]_{15}H$ und 2,7 g Hexamethyldisiloxan in 200 ml Ethylenglykoldimethylether wird 4 Stunden bei 80 °C gerührt. Anschließend werden bei dieser Temperatur 9,45 g $[OSiMe(CH_2)_3NH(CH_2)_2NH_2]_4$, gelöst in 35 ml Ethylenglykoldimethylether, innerhalb von 3 Stunden zudosiert. Nach Entfernung des Lösungsmittels und sonstiger flüchtiger Bestandteile bei 60 °C und 20 Pa werden 246,2 g hellgelbes Öl der durchschnittlichen Zusammensetzung

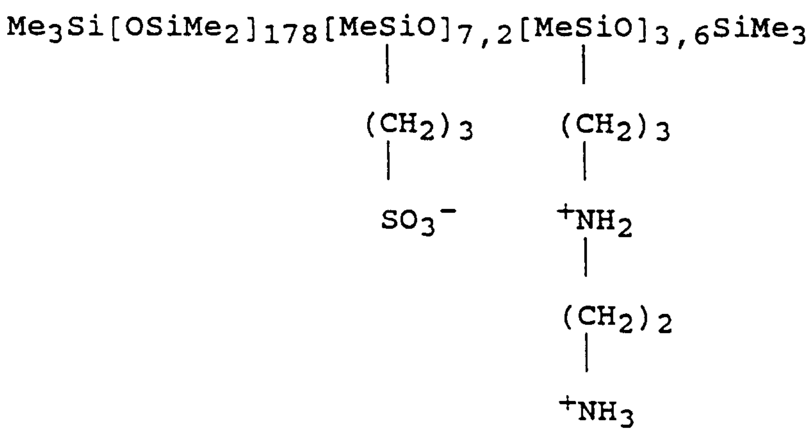

erhalten.

## Patentansprüche

1. Verfahren zur Herstellung von Schwefel enthaltende organische Reste aufweisenden Organosiliciumverbindungen, dadurch gekennzeichnet, daß Organosiliciumverbindungen aus Einheiten der allgemeinen Formel

$$R_a(R^1O)_bR^2_cSiO_{\frac{4-a-b-c}{2}} \quad (I),$$

wobei

- R gleich oder verschieden sein kann und einen einwertigen organischen Rest bedeutet,
- $R^1$ gleich oder verschieden sein kann und Wasserstoffatom oder einen einwertigen organischen Rest bedeutet,
- $R^2$ gleich oder verschieden sein kann und einen Rest -QX bedeutet mit Q gleich zweiwertigem Kohlenwasserstoffrest ausgewählt aus Alkylen- oder Cycloalkylenresten mit 2 bis 10 Kohlenstoffatomen und X gleich Halogenatom,
- a 0, 1, 2 oder 3 ist,
- b 0, 1, 2 oder 3 ist und
- c 0, 1, 2 oder 3 ist,

mit der Maßgabe, daß die Organosiliciumverbindung pro Molekül mindestens einen Rest $R^2$ aufweist und die Summe aus a, b und c kleiner oder gleich 4 ist,
mit Sulfit in Anwesenheit von Wasser umgesetzt werden.

**2.** Verfahren nach Anspruch 1, dadurch gekennzeichnet, daß es sich bei den Organosiliciumverbindungen aus Einheiten der Formel (I) um Silane der allgemeinen Formel

$$R^6_d(R^7O)_eSiR^8_g \quad (II)$$

und/oder deren Teilhydrolysate handelt, wobei

- $R^6$ gleich oder verschieden sein kann und einen einwertigen organischen Rest bedeutet,
- $R^7$ gleich oder verschieden sein kann und Wasserstoffatom oder einen einwertigen organischen Rest bedeutet,
- $R^8$ gleich oder verschieden sein kann und einen Rest -QX bedeutet mit Q gleich zweiwertigem Kohlenwasserstoffrest ausgewählt aus Alkylen- oder Cycloalkylenresten mit 2 bis 10 Kohlenstoffatomen und X gleich Halogenatom,
- d 0, 1, 2 oder 3 ist,
- e 0, 1, 2 oder 3 ist und
- g 1, 2 oder 3 ist,

mit der Maßgabe, daß die Summe aus d + e + g gleich 4 ist.

**3.** Verfahren nach Anspruch 1 oder 2, dadurch gekennzeichnet, daß mindestens ein Silan der allgemeinen Formel

$$R^6_d(R^7O)_eSiR^8_g \quad (II)$$

und/oder dessen Teilhydrolysat,
wobei $R^6$, $R^7$, $R^8$, d, e und g eine der in Anspruch 2 dafür angegebenen Bedeutungen haben, mit der Maßgabe, daß die Summe aus d + e + g gleich 4 ist und e eine ganze Zahl verschieden 0 bedeutet, und gegebenenfalls mindestens ein Silan der allgemeinen Formel

$$R^4_fSi(OR^5)_{4-f} \quad (III)$$

und/oder dessen Teilhydrolysat, wobei

- $R^4$ gleich oder verschieden sein kann und einen einwertigen organischen Rest bedeutet,
- $R^5$ gleich oder verschieden sein kann und Wasserstoffatom oder einen einwertigen organischen Rest bedeutet und
- f 0, 1, 2 oder 3 ist,

mit Sulfit in Anwesenheit von Wasser umgesetzt wird.

**4.** Verfahren nach einem oder mehreren der Ansprüche 1 bis 3, dadurch gekennzeichnet, daß als Sulfit bei 100 °C und 1013 hPa in Wasser zumindest zu 20 Gewichtsprozent, bezogen auf das Gesamtgewicht der Lösung, lösliche Verbindungen der Formel

$(M'_{v'})_2SO_3$ (IV),

eingesetzt werden, wobei
- M' gleich oder verschieden sein kann und Kation, ausgenommen Proton, bedeutet und
- v' gleich dem reziproken Wert der Ladung von M' ist.

**5.** Verfahren nach einem oder mehreren der Ansprüche 1 bis 4, dadurch gekennzeichnet, daß Sulfit in Mengen von 0,8 Mol bis 1,5 Mol, bezogen auf ein Mol Rest X in der erfindungsgemäß eingesetzten Organosiliciumverbindung aus Einheiten der Formel (I), eingesetzt wird.

**6.** Verfahren nach einem oder mehreren der Ansprüche 1 bis 5, dadurch gekennzeichnet, daß die Umsetzung bei einer Temperatur von 20 °C bis 220 °C durchgeführt wird.

**7.** Verfahren nach einem oder mehreren der Ansprüche 1 bis 6, dadurch gekennzeichnet, daß die Umsetzung bei einem Druck zwischen 900 und 50 000 hPa durchgeführt wird.

**8.** Verfahren nach einem oder mehreren der Ansprüche 1 bis 7, dadurch gekennzeichnet, daß die Umsetzung in Anwesenheit von Katalysator durchgeführt wird.

**9.** Verfahren nach einem oder mehreren der Ansprüche 1 bis 8, dadurch gekennzeichnet, daß die so erhaltenen Organosiliciumverbindungen, die mindestens einen über Kohlenstoff an Silicium gebundenen Rest mit einer Sulfonatgruppe oder einer ringförmig gebundenen Gruppierung $-SO_2-O-$ aufweisen, mit mindestens einer Organosiliciumverbindung (1) äquilibriert werden.

**10.** Verfahren nach Anspruch 9, dadurch gekennzeichnet, daß als Organosiliciumverbindungen (1) solche aus Einheiten der allgemeinen Formel

$R^9_i(R^{10}O)_hSiO_{(4-i-h)/2}$ (VI)

eingesetzt werden, wobei
- $R^9$ gleich oder verschieden sein kann und Wasserstoffatom oder einen einwertigen organischen Rest bedeutet,
- $R^{10}$ gleich oder verschieden sein kann und Wasserstoffatom oder einen einwertigen, organischen Rest bedeutet,
- i 0, 1, 2 oder 3 ist und
- h 0, 1, 2 oder 3 ist,

mit der Maßgabe, daS die Summe aus i und h kleiner oder gleich 3 ist.

## Claims

**1.** Process for the preparation of organosilicon compounds carrying sulphur-containing organic radicals, characterized in that organosilicon compounds made up of units of the general formula

$R_a(R^1O)_bR^2_cSiO_{(4-a-b-c)/2}$ (I)

in which
R can be identical or different and is a monovalent organic radical,
$R^1$ can be identical or different and is a hydrogen atom or a monovalent organic radical,
$R^2$ can be identical or different and is a radical -QX, where Q is a divalent hydrocarbon radical selected from alkylene or cycloalkylene radicals having 2 to 10 carbon atoms and X is a halogen atom,
a is 0, 1, 2 or 3,
b is 0, 1, 2 or 3 and
c is 0, 1, 2 or 3,
with the proviso that the organosilicon compound has at least one radical $R^2$ per molecule and the sum of a, b and c is less than or equal to 4,
are reacted with sulphite in the presence of water.

**2.** Process according to Claim 1, characterized in that the organosilicon compounds made up of units of formula (I) are silanes of the general formula

$R^6{}_d(R^7O)_eSiR^8{}_g$ (II)

and/or partial hydrolysates thereof, in which
$R^6$ can be identical or different and is a monovalent organic radical,
$R^7$ can be identical or different and is a hydrogen atom or a monovalent organic radical,
$R^8$ can be identical or different and is a radical -QX, where Q is a divalent hydrocarbon radical selected from alkylene or cycloalkylene radicals having 2 to 10 carbon atoms and X is a halogen atom,
d is 0, 1, 2 or 3,
e is 0, 1, 2 or 3 and
g is 1, 2 or 3,
with the proviso that the sum d + e + g is equal to 4.

**3.** Process according to Claim 1 or 2, characterized in that at least one silane of the general formula

$R^6{}_d(R^7O)_eSiR^8{}_g$ (II)

and/or a partial hydrolysate thereof,
in which $R^6$, $R^7$, $R^8$, d, e and g are as defined in Claim 2, with the proviso that the sum of d + e + g is equal to 4 and e is an integer other than 0,
and, if appropriate, at least one silane of the general formula

$R^4{}_fSi(OR^5)_{4-f}$ (III)

and/or a partial hydrolysate thereof, in which
$R^4$ can be identical or different and is a monovalent organic radical,
$R^5$ can be identical or different and is a hydrogen atom or a monovalent organic radical, and
f is 0, 1, 2 or 3,
is reacted with sulphite in the presence of water.

**4.** Process according to one or more of Claims 1 to 3, characterized in that the sulphite used is a compound which is soluble in water at 100 °C and 1013 hPa to the extent of at least 20 per cent by weight, based on the total weight of the solution, said compound having the formula

$(M'_{v'})_2SO_3$ (IV)

in which
M' can be identical or different and is a cation, with the exception of the proton, and
v' has the reciprocal value of the charge of M'.

**5.** Process according to one or more of Claims 1 to 4, characterized in that sulphite is used in amounts of 0.8 mol to 1.5 mol, based on one mole of radical X in the organosilicon compound made up of units of formula (I) and used according to the invention.

**6.** Process according to one or more of Claims 1 to 5, characterized in that the reaction is carried out at a temperature of 20 °C to 220 °C.

**7.** Process according to one or more of Claims 1 to 6, characterized in that the reaction is carried out at a pressure of between 900 and 50,000 hPa.

**8.** Process according to one or more of Claims 1 to 7, characterized in that the reaction is carried out in the presence of a catalyst.

**9.** Process according to one or more of Claims 1 to 8, characterized in that the resulting organosilicon compounds, which carry at least one radical bonded to silicon via carbon and having a sulphonate group or a grouping $-SO_2O-$ bonded to form a ring, are equilibrated with at least one organosilicon

compound (1).

**10.** Process according to Claim 9, characterized in that the organosilicon compounds (1) used are those made up of units of the general formula

$R^9_i(R^{10}O)_hSiO_{(4-i-h)/2}$ (VI)

in which
$R^9$ can be identical or different and is a hydrogen atom or a monovalent organic radical,
$R^{10}$ can be identical or different and is a hydrogen atom or a monovalent organic radical,
i is 0, 1, 2 or 3 and
h is 0, 1, 2 or 3,
with the proviso that the sum of i and h is less than or equal to 3.

## Revendications

**1.** Procédé pour la préparation de composés organosiliciés présentant des radicaux organiques contenant du soufre caractérisé en ce que les composés organosiliciés constitués de motifs de formule générale

$$R_a(R^1O)_bR^2_cSiO_{\frac{4-a-b-c}{2}} \quad (I)$$

les radicaux R pouvant être identiques ou différents et représentent un radical organique monovalent,
les radicaux $R^1$ pouvant être identiques ou différents et représentent un atome d'hydrogène ou un radical organique monovalent,
les radicaux $R^2$ pouvant être identiques ou différents et représentent un radical -QX avec Q égal à un radical hydrocarboné bivalent pris dans le groupe des radicaux alkylènes ou cycloalkylènes avec 2 à 10 atomes de carbone, et X est un atome d'halogène,
a valant 0, 1, 2 ou 3,
b valant 0, 1, 2 ou 3, et
c valant 0, 1, 2 ou 3,
à la condition que le composé organosilicié molécule au moins un radical $R^2$ par molécule et que la somme de a, b et c soit inférieure ou égale à 4,
avec un sulfite en présence de l'eau.

**2.** Procédé selon la revendication 1, caractérisé en ce que chez les composés organosiliciés composés de motifs de formule (I) il s'agit de silanes de formule générale

$R^6_d(R^7O)_eSiR^8_g$ (II)

et/ou de leurs hydrolysats partiels
les radicaux $R^6$ pouvant être identiques ou différents et
ayant une des significations données ci-dessus pour R,
les radicaux $R^7$ pouvant être identiques ou différents et ayant une des significations données ci-dessus pour $R^1$,
les radicaux $R^8$ pouvant être identiques ou différents et représenter un radical -QX avec Q égal à un radical hydrocarboné bivalent pris dans le groupe des radicaux alkylène et cycloalkylène avec 2 à 10 atomes de carbon et X étant un atome d'halogène,
d valant 0, 1, 2 ou 3, de préférence 0, 1 ou 2,
e valant 0, 1, 2 ou 3, de préférence 1, 2 ou 3,
g valant 0, 1, 2 ou 3, de préférence 1 ou 2, à la condition que la somme de d + e + g soit égale à 4.

**3.** Procédé selon la revendication 1 ou 2, caractérisé en ce qu'on fait réagir un silane de formule générale

$R^6{}_d(R^7O)_eSiR^8{}_g$ (II)

et/ou sont hydrolysat partiel,
$R^6$, $R^7$, $R^8$, d, e et g ayant l'une des significations données dans la revendication 2, à la condition que la somme de d + e + g soit égale à 4 et que e soit un nombre entier différent de 0,
et éventuellement avec au moins un silane de formule générale

$R^4{}_fSi(OR^5)_{4-f}$ (III)

et/ou son hydrolysat partiel,
les radicaux $R^4$ pouvant être identiques ou différents et représentant un radical organique monovalent,
les radicaux $R^5$ pouvant être identiques ou différents et représentant un atome d'hydrogène ou un radical organique monovalent et
f valant 0, 1, 2 ou 3, avec un sulfite en présence de l'eau.

**4.** Procédé selon une ou plusieurs des revendications 1 à 3, caractérisé en ce qu'on utilise en tant que sulfite des composés hydrosolubles à 100 °C et sous 1013 hPa à au moins 20% en poids par rapport au poids total de la solution, de formule

$(M'_{v'})_2SO_3$ (IV)

les radicaux M' pouvant être identiques ou différents et représentent des cations, à l'exception des protons, et
v' étant égale à la valeur réciproque de la charge de M'.

**5.** Procédé selon une ou plusieurs des revendications 1 à 4, caractérisé en ce qu'on utilise le sulfite en quantités de 0,8 mole à 1,5 mole par rapport à 1 mole du radical X dans le composé organosilicié composé de motifs de formule (I) utilisé conformément à l'invention.

**6.** Procédé selon une ou plusieurs des revendications 1 à 5, caractérisé en ce qu'on met en oeuvre la réaction à une température de 20 °C à 220 °C.

**7.** Procédé selon une ou plusieurs des revendications 1 à 6, caractérisé en ce qu'on met en oeuvre la réaction sous une pression entre 900 et 50 000 hPa.

**8.** Procédé selon une ou plusieurs des revendications 1 à 7, caractérisé en ce qu'on met en oeuvre la réaction en présence d'un catalyseur.

**9.** Procédé selon une ou plusieurs des revendications 1 à 8, caractérisé en ce qu'on équilibre les composés organosiliciés ainsi obtenus qui présentent au moins un radical avec un groupe sulfonate lié au silicium par l'intermédiaire du carbone ou un groupement $-SO_2-O-$ lié de façon cyclique, avec au moins un composé organosilicié (1).

**10.** Procédé selon une ou plusieurs des revendications 1 à 9, caractérisé en ce qu'on utilise en tant que composés organosiliciés (1) ceux qui sont constitués de motifs de formule générale

$R^9{}_i(R^{10}O)_hSiO_{(4-i-h)/2}$ (IV)

les radicaux $R^9$ pouvant être identiques ou différents et représenter l'atome d'hydrogène ou un radical organique monovalent,
les radicaux $R^{10}$ pouvant être identiques ou différents et représenter un atome d'hydrogène ou un radical organique monovalent,
i valant 0, 1, 2 ou 3 et
h valant 0, 1, 2 ou 3,
à la condition que la somme de i et h soit inférieure ou égale à 3.